# EUROPEAN PATENT SPECIFICATION

(11) **EP 0 516 421 B1**
(45) Date of publication and mention of the grant of the patent: **20.12.1995**
(21) Application number: 92304849.0
(22) Date of filing: 28.05.1992
(51) Int. Cl.: H02K 5/15, H02K 5/167

(54) **A miniature motor**
Miniaturmotor
Moteur miniature

(30) Priority: 30.05.1991 JP 39506/91
(43) Date of publication of application: 02.12.1992
(73) Proprietor: MABUCHI MOTOR KABUSHIKI KAISHA, Matsudo-shi, Chiba-ken (JP)
(72) Inventor: Uzawa, Motohisa, Matsudo-shi, Chiba-ken (JP)
(74) Representative: Hitchcock, Esmond Antony

(56) References cited:
- GB-A- 2 161 029
- US-A- 4 504 754
- PATENT ABSTRACTS OF JAPAN vol. 012, no. 003 (E-570) 7 January 1988 & JP-A-62 163 537 (MABUCHI MOTOR CO. LTD.) 20 July 1987
- PATENT ABSTRACTS OF JAPAN vol. 11, no. 17 (E-471) (2464) 17 January 1987 & JP-A-61 189 149 (MATSUSHITA SEIKO CO. LTD.) 22 August 1986
- PATENT ABSTRACTS OF JAPAN vol. 011, no. 355 (E-558) 19 November 1987 & JP-A-62 131 734 (MABUCHI MOTOR CO. LTD.) 15 June 1987

## Description

This invention relates generally to miniature electric motors of the type used for example, in power tools and household electric appliances such as vacuum cleaners. More particularly, it relates to such motors which include oil-impregnated bearings to support the motor rotor.

In known electric motors of the above type difficulties arise with the accurate location of the bearings, and/or the loss of oil therefrom. Either problem leads to operating difficulties, and the possibility that the useful working life of the motor is significantly reduced. These issues are addressed by the present invention.

The present invention is directed at a miniature electric motor comprising a metallic cylindrical housing closed at one end and fitted with an end plate at the other end; a permanent magnet mounted in the housing; a rotor having an armature facing the magnet and a commutator adjacent the end plate, the end plate including brushes for making sliding contact with the commutator and input terminals electrically connected thereto; and an oil-impregnated bearing disposed in a bearing retainer in each of the end plate and the closed end of the housing for supporting the rotor. According to the invention, a plurality of local projections are formed on the inside end face of each bearing retainer, each respective bearing being held in place by contact between the end face thereof and the projections. Normally, the projections are equally circumferentially spaced about the rotational axis of the rotor shaft.

In motors of the invention, the end plate may be of a metallic or a plastics material. If it is metallic, the projections can be formed by plastic deformation of the plate, for example by punching or stamping.

As will be appreciated from the following description, the invention enables oil impregnated bearings to be securely held in bearing retainers on a motor housing or end plate, while minimising oil leakage and improving the stability of the lubrication between the respective bearing and the rotor shaft. This results in more reliable operation of the motor.

Some known miniature electric motor assemblies and one preferred embodiment of the present invention will be described with reference to the accompanying drawings wherein:
Figure 1 is a longitudinal part-sectional elevation of a known miniature motor assembly;
Figures 2 to 4 are detail part-sectional views illustrating known bearing retainer assemblies;
Figure 5 is an external end view of the bearing retainer assembly shown in Figure 4;
Figure 6 is a longitudinal part-sectional elevation of a miniature motor according to the present invention; and
Figure 7 is an external end view of the motor of Figure 6.

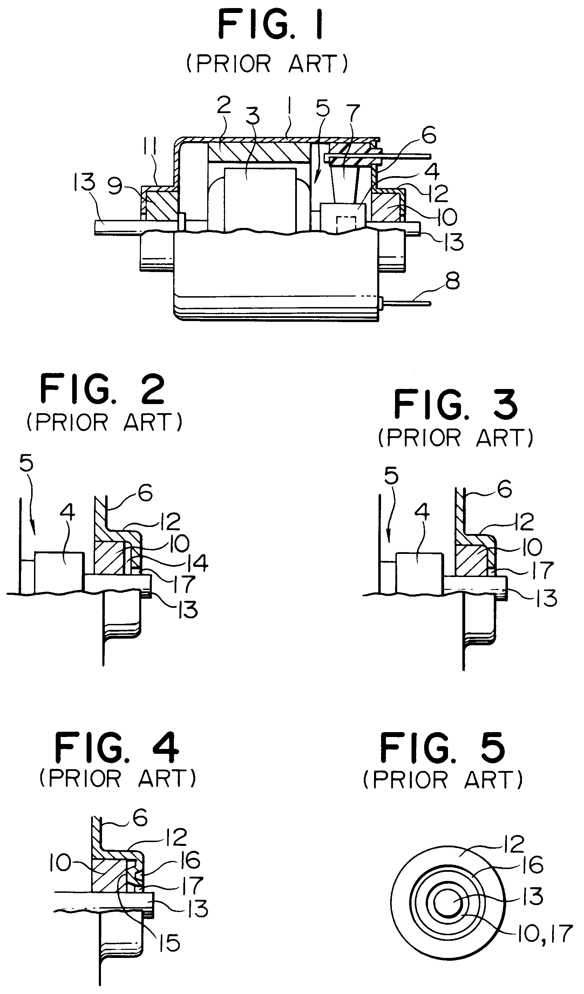

The miniature motor shown in Figure 1 comprises a housing 1 made of a metallic material, such as mild steel, formed into a bottomed hollow cylindrical shape and having a permanent magnet 2 formed into an arc segment shape, for example, on the inner circumferential surface thereof. A rotor 5 comprising an armature 3 facing the permanent magnet 2 and a commutator 4 is mounted on a shaft 13 rotatable in the housing 1. An end plate 6 made of the same metallic material as that of the housing 1, is engaged with the opening of the housing 1. Brush arms 7 adapted to make sliding contact with the commutator 4 are coupled to input terminals 8 for electrical connection to an external power supply (not shown) to drive the motor in known manner. Oil-impregnated bearings 9,10 are secured in bearing retainers 11 and 12 provided on the housing 1 and end plate 6, respectively as shown.

In the bearing retainer assembly shown in Figure 2A a gap 14 is formed between the inside end face of the bearing retainer 12 and the end face of the oil-impregnated bearing 10. In the assembly shown in Figure 3, the oil-impregnated bearing 10 is positioned and held in place by bringing its end face into direct contact with the inside end face of the bearing retainer 12. in each case the shaft 13 extends through a hole 17 in the retainer 12 with substantial clearance.

The assembly shown in Figures 4 and 5 includes an annular projection 15 provided on the inside end face of the bearing retainer 12 with a complementary annular groove formed on its outside end face.

The bearing retainer assemblies of Figures 2 to 5 are illustrated in the motor end cap 6. Generally, the assembly in the base of the housing will be the same in each case.

In the assembly of Figure 2, the oil-impregnated bearing 10 is likely to move in the axial direction. If the oil bearing 10 is shifted to the right by an impact or vibration for example, the gap 14 between is enlarged, enabling the shaft 13 to further protrude from the end plate 6, and vice versa. Such movement of the shaft 13, and rotor 5, has an adverse effect on motor performance. To meet this problem, the bearing 10 has to be better secured, and/or the motor has to be protected from impacts and vibration.

The assembly of Figure 3 has the problem of lubricant seeping out from the oil-impregnated bearing 10 through the hole 17. This may prevent oil films from adequately forming on the contact surface with the shaft 13, leading to increased wear and the seizure or other failure of the miniature motor in extreme cases. The volume of lubricant oil can be increased by increasing the capacity of the bearing 10, but this can require an increase in the size of the miniature motor. Alternatively, the hole 17 can be eliminated, but then the contact area between the shaft 13 and the bearing 10 is reduced if the overall size of the motor is to remain the same.

In the assembly of Figures 4 and 5, lubricant seeping out of the oil-impregnated bearing 10 tends to be caught in the annular projection 15, and eventually discharge through the hole 17. Thus, very similar problems arise as with the assembly of Figure 3.

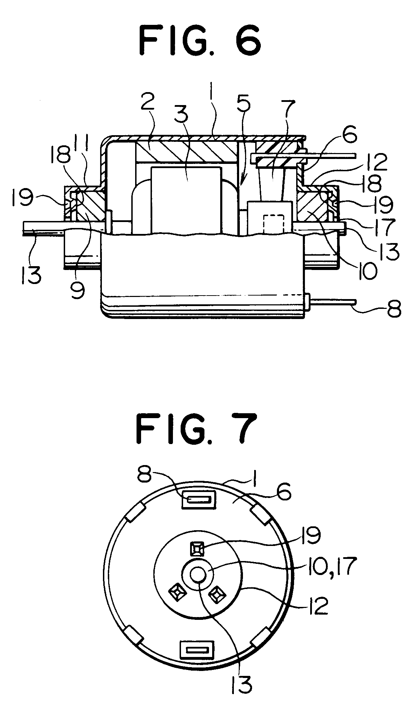

In the embodiment of the invention illustrated in Figures 6 and 7 local projections 18 are provided on the inside end faces of bearing retainers 11, 12 on the housing 1 and an end plate 6 respectively. They are shown at circumferentially substantially equal spacings and with the same protruding length. The projections 18 can be created by forming recesses 19 using a punch or male die (both not shown) from the outside surfaces of the bearing retainers 11, 12 when stamping the housing 1 and the end plate 6 from a metal sheet.

With the assembly shown, the bearings 9, 10 are secured relative to the bearing retainers 11, 12 and positioned at predetermined locations by pressing from the inside until the end faces thereof come in contact with the local projections 18. Thus, the bearings 9, 10 can be secured with the minimum required press-fitting or fastening allowances, and prevented from unwanted shifting in the axial direction. Since the local projections 18 provided on the inside end faces of the bearing retainers 11, 12 are discontinuous in the circumferential direction, as shown in Figure 7, there is no fear of lubricant accumulating proximate the hole 17, and it is more readily re-absorbed into the bearing 9, 10 around the periphery thereof.

Although the end plate 6 is referred to above as being metallic, it may be made of any suitable material, for example a plastics material such as a thermoplastic resin, and injection moulded. The shape and dimensions of the local projections 18 provided on the bearing retainers 11, 12 can be freely selected. The number of the local projections 18 should be at least two, and preferably more than the three shown.

## Claims

1. A miniature electric motor comprising a metallic cylindrical housing (1) closed at one end and fitted with an end plate (6) at the other end; a permanent magnet (2) counted in the housing; a rotor (5) having an armature (3) facing the magnet (2) and a commutator (4) adjacent the end plate (6), the end plate including brushes (7) for caking sliding contact with the commutator (4) and input terminals (8) electrically connected thereto; and an oil-impregnated bearing (9,10) disposed in a bearing retainer (11,12) in each of the end plate and the closed end of the housing (1) for supporting the rotor (5),
CHARACTERISED IN THAT
a plurality of local projections (18) are formed on the inside end face of each bearing retainer (11,12), each respective bearing (9,10) being held in place by contact between the end face thereof and the projections (18).

2. A miniature motor according to Claim 1 wherein the projections (18) are equally circumferentially spaced about the rotational axis of the rotor shaft (13).

3. A miniature motor according to Claim 1 or Claim 2 wherein the end plate (6) is metallic, the projections (18) being formed by plastic deformation of the end plate (6).

4. A miniature motor according to Claim 1 or Claim 2 wherein the end plate (6) is made of a plastics material.

## Patentansprüche

1. Miniatur-Elektromotor, aufweisend ein metallisches zylindrisches Gehäuse (1), das an einem Ende geschlossen ist und an dessen anderem Ende eine Endplatte (6) befestigt ist; einen im Gehäuse angebrachten Permanentmagneten (2); einen Rotor (5), der einen dem Magneten (2) gegenüber liegenden Anker (3) und einen Kommutator (4) nahegelegen zur Endplatte (6) aufweist, wobei die Endplatte (6) Bürsten (7) für einen Schleifkontakt mit dem Kommutator (4) und elektrisch mit diesen verbundene Eingangsanschlüsse (8) umfaßt; und ein ölimprägniertes Lager (9, 10), das in einem Lagerhalter (11, 12) sowohl in der Endplatte als auch dem geschlossen Ende des Gehäuses (1) zur Lagerung des Rotors (5) angeordnet ist,
dadurch gekennzeichnet,
daß mehrere lokaler Vorsprünge (18) auf der innenliegenden Endfläche jedes Lagerhalters (11, 12) ausgebildet sind, wobei jedes jeweilige Lager (9, 10) durch Kontakt zwischen seiner Endfläche und den Vorsprüngen (18) in seiner Position gehalten wird.

2. Miniaturmotor nach Anspruch 1, in welchem die Vorsprünge (18) umfangsmäßig gleich beabstandet um die Drehachse der Rotorwelle (13) angeordnet sind.

3. Miniaturmotor nach Anspruch 1 oder Anspruch 2, in welchem die Endplatte (6) metallisch ist, wobei die Vorsprünge (18) durch plastische Deformation der Endplatte (6) ausgebildet sind.

4. Miniaturmotor nach Anspruch 1 oder 2, in welchem die Endplatte (6) aus Kunststoffmaterial gefertigt ist.

## Revendications

1. Moteur électrique miniature comprenant un boîtier cylindrique métallique (1) fermé à une extrémité et muni d'une plaque d'extrémité (6) à l'autre extrémité ; un aimant permanent (2) monté dans le boîtier ; un rotor (5) comportant une armature (3) faisant face à l'aimant (2) et un collecteur (4) adjacent à la plaque d'extrémité (6), la plaque d'extrémité comportant des balais (7) pour établir un contact de glissement avec le collecteur (4) et des bornes d'entrée (8) électriquement connectées à ceux-ci ; et un palier imprégné d'huile (9, 10) disposé dans un dispositif de maintien de palier (11, 12) dans la plaque d'extrémité et dans l'extrémité fermée du boîtier (1) pour supporter le rotor (5),
caractérisé en ce que :
une série de saillies locales (18) sont formées sur la face d'extrémité intérieure de chaque dispositif de maintien de palier (11, 12), chaque palier respectif (9, 10) étant maintenu en place par contact entre la face d'extrémité de celui-ci et les saillies (18).

2. Moteur miniature selon la revendication 1, dans lequel les saillies (18) sont espacées circonférenciellement de distances égales autour de l'axe de rotation de l'arbre de rotor (13).

3. Moteur miniature selon la revendication 1 ou la revendication 2, dans lequel la plaque d'extrémité (6) est métallique, les saillies (18) étant formées par déformation plastique de la plaque d'extrémité (6).

4. Moteur miniature selon la revendication 1 ou la revendication 2, dans lequel la plaque d'extrémité (6) est en matière plastique.
